Europäisches Patentamt

(19) **European Patent Office**

**Office européen des brevets**

(11) Publication number: **0 040 586**

**A1**

(12) **EUROPEAN PATENT APPLICATION**

(21) Application number: **81830068.3**

(22) Date of filing: **04.05.81**

(51) Int. Cl.³: **G 01 N 21/41**

(30) Priority: **21.05.80 IT 4004380**

(43) Date of publication of application:
**25.11.81 Bulletin 81/47**

(84) Designated Contracting States:
**AT BE CH DE FR GB LI LU NL SE**

(71) Applicant: **METRO-MATIC S.a.S. di POLETTI R. & C.**
**Viale Mentana, 131**
**Parma(IT)**

(72) Inventor: **Poletti, Roberto**
**Via Fornace Zunini, 1**
**S. Ilario d'Enza Reggio Emilia(IT)**

(74) Representative: **Bonfreschi, Mario**
**Bugnion S.p.A. Viale Trento Trieste, 25**
**I-41100 Modena(IT)**

(54) **A device for reading the optical signal provided by a refractometer.**

(57) The invention concerns a device for reading the optical signal provided by a refractometer.

A device such as this basically comprises a photo-electric transducer (6) which is made to shift, -by means of an electric motor (10) -, in correspondence to the optical signal provided by a refractometer of the type which uses the critical angle of refraction and the total reflection, and reveals the zone of light 3a), and the zone of shade (4a). The transducer (6) commands an electrical impulse selection meter which is supplied in turn by an impulse generator giving out a fixed number of impulses per revolution of the electric motor (10), so as to differentiate between those impulses received when the transducer (6) is in shade (4a), and those received when the transducer is in light (3a).

The signal supplied by the impulse selection meter, being appropriately processed, allows the identification of the position of that line of separation (5a) between the light and shaded zones (3a,4a) provided by the refractometer, and thus to arrive at the refractive index of the substance under examination.

Fig.2

0040586

A Device for reading the optical signal provided by
a refractometer

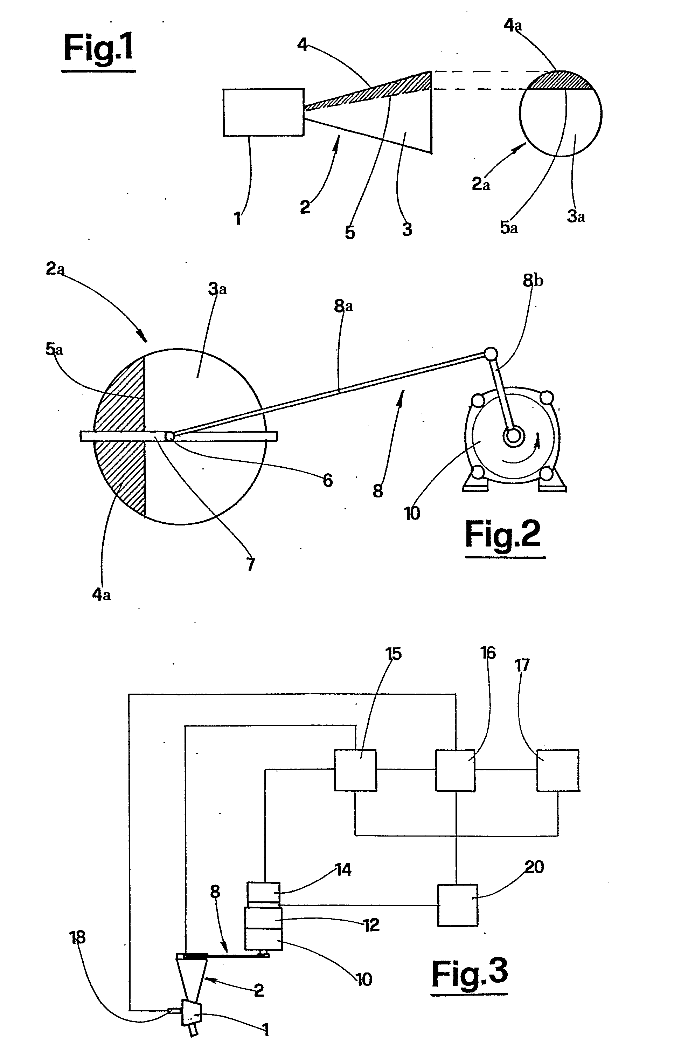

The invention herein described is a device for reading
the optical signal provided by a refractometer.
A refractometer is an instrument which functions by
making use of the optical phenomena connected with the
crossing by luminous rays from side to side of an area
of separation of two substances having differing
refractive indices. By using such instruments it is
possible, by the appropriate assessment of these optical
phenomena, to measure the refractive index of a substance.
Refractometers are used mostly in the manufacture of
foodstuffs, pharmaceutical and petrochemical products etc
as, by measuring the refractive index of a substance,
in particular that of a liquid, it becomes possible to
arrive at its density and, in the case of a solution, at
the degree of concentration of the solution itself.
Those refractometers used mainly for the above-mentioned
purposes utilise the optical phenomena being the critical angle of refraction and the total reflection, and
provide an optical signal ( indicated schematically in
fig 1 ) consisting of a cone which presents a zone of
light, and a zone of shade, perfectly distinguishable and divided along a plane of separation, which in the right-angled cross-sections of the cone appears as a line. The size of the light and shaded zones, or, if one is referring to the cone, the position of the line of separation, is determined by the value of the refractive index of the substance under examination, or if one is dealing with liquids or solutions, of their density and concentration. There are various existing devices for assessing a like optical signal. In one such device the optical signal is passed through a photo-electric cell, which supplies a voltage proportionate to the size of the illuminated zone.

In another device provision is made for a cell to be fixed in a constantly illuminated zone, which gives out an electrical reference signal; a second cell, connected to a potentiometer by way of a shaft, shifts by means of a motorised element and centres on the line of separation so that the electrical signal directed at the line by the second cell is such, -when compared with the fixed signal from the fixed first cell -, that it arrests the function of the motorised element. According to the position of the line of separation,- and therefore that of the second cell -, the potentiometer supplies an electrical signal proportionate to that position which, having been appropriately plotted, will allow arrival at the refractive index of the substance under examination.

With regard to the precision of such measurements, these devices respond to the precision capability of the photoelectric cell, in the first instance, and the potentiometer in the second; they also respond to variations - however slight - in the voltage supply, hence the need for efficient stabiliser circuits to control the voltage. Moreover, devices such as these do not offer reliability in precision across the entire field of reading.

One object of the invention herein described is to obviate the inconveniences listed above, providing a device for reading the optical signal provided by a refractometer which offers a high degree of precision in measurement, and an all but total reliability across the entire field of reading, and which is not affected by variations in the voltage supply.

A further object of the invention herein described is to provide a simple device offering a high degree of trustworthiness in its general function.

These objects, and others, are all obtained by the device herein described of a type that functions by utilising a refractometer designed to provide an optical signal consisting of a beam of light whose cross-section presents a light zone and a shaded zone, perfectly distinguishable and divided along a line of separation, characterised by the fact that it comprises: a photo-electric transducer placed in cyclical motion by motorised elements comprising an electric motor, along a fixed trajectory which intersects the said line of separation, whatever this latter's position happens to be within the scope of the said optical signal; an electrical impulse generator designed to supply a constant number of impulses per revolution of the electric motor; an electrical impulse selection meter whose selective operation is commanded by the signal coming from the photo-electric transducer, designed to select and count the individual impulses sent out by the said generator when the said transducer is found to be in the shaded zone, separately from those impulses sent out by the generator when the said transducer is found to be in the light zone; means for processing the signal provided by the said impulse selection meter.

Further characteristics and advantages will emerge more clearly from the detailed description which follows of a preferred, though not exclusive form of embodiment of the invention herein described illustrated purely as an unlimited example in the accompanying drawings, - in which:-

fig 1  shows a schematic representation of the optical signal, shown also in cross-section, provided by a refractometer of the kind under discussion

fig 2  shows a schematic representation of one possible embodiment of drive for the photo-electric transducer in the device herein described

fig 3  shows a block scheme of one possible embodiment of the device herein described

In fig. 1 block (1) represents a refractometer of the kind under discussion, from which proceeds an optical signal constituted by a conical beam (2) which manifests a zone of light (3) and a zone of shade (4) perfectly distinguishable and divided along a plane of separation (5). Fig. 1 also shows a circular cross-section (2a) of the beam (2); one may see in this cross-section a zone of light (3a) which corresponds to zone (3) and a zone of shade (4a) which corresponds to zone (4) divided along a line of separation (5a). The position of the line of separation (5a) - ( or the plane (5) ) is determined by the refractive index of the substance under examination and shifts, parallel with itself, in sympathy with the variations in the refractive index; by reading this position it becomes possible to arrive at the refractive index of the substance under examination.

For reading of the position of the line of separation the device herein described comprises a photo-electric transducer (6) put into back-and-forth motion along a rectilinear guide (7) which is disposed perpendicularly with respect to the line of separation and runs between two points, diametrically opposed with respect to the cross-section (2a) of the beam (2).

The transducer constitutes the sliding extremity of a crank mechanism (8) furnished with a rod (8a) and crank (8b); the crank (8b) is placed in rotation by an electric motor (12) through the interpositioning of a reduction gear (10).

The cell (6) thus executes a cyclical movement along a fixed trajectory represented by the guide (7), which intersects the line of separation (5a) in whatever position the latter happens to be.

Connected to the motor (12) is an electrical impulse generator (14) which provides a constant number of impulses per revolution of the motor, which number may be regulated in advance.

The impulses provided by the generator (14) are sent to an impulse selection meter (15), to which is also sent the electrical signal coming from the transducer (6) which provides an electrical signal (or not) depending upon whether it is illuminated (or not). The said

transducer's (6) sensitivity may be regulated in order to permit the correct functioning of the device even in the event that the line of separation (5a) should be less than precise, or apt to produce halo effects; thus when selecting a setting, one would choose that luminous intensity which would break the transducer's (6) signal at the desirable level. The signal supplied by the transducer (6) commands the selective operation of the selection meter (15) so as to produce a separate count of those impulses sent out by the generator (14) when the transducer (6) is found to be in the light zone as distinct from those impulses sent out from the generator when the transducer (6) is found to be in the shaded zone. In this manner, by knowing the differing number of impulses counted in one instance and in the other, one is able to establish the position of the line of separation (5a) inasmuch as the position adopted by the transducer during its movement depends upon the motor's (12) number of revolutions, upon which also depends the number of impulses sent out by the generator (14).

In other words, for every single revolution of the motor, to which also corresponds a determinate number of impulses, the transducer accomplishes a slight left-ward movement ( as shown e.g. in fig 2 ); when
the transducer (6) crosses a point corresponding to the
line of separation (5a) it makes provision for sending
that command to the selection meter (15) which will
arrest the count of impulses sent out from the light
zone, and commence the count of impulses sent out from
the shaded zone. The number of these impulses is thus
dependent on the position of the line of separation (5a).
The signal is sent, via a signal processing device (16)
and an amplifying circuit (17) -, both being of the
kinds previuosly mentioned -, to instruments which can
supply a direct reading of it.

In the embodiment shcwn schematically in fig 3, a
thermometrical feeler (18) is indicated, which, according to the temerature of the substance under examination,-
- a temperature which might occasion variations in the
characteristics of the substance to be measured -, carries an electric corrective signal to the device (16).
Fig (20) indicates an electricity supply circuit.

The functioning of the device herein described is not
affected by any eventual variation in the voltage
supply: in fact - even if, as a result of such a variation , the motor's (12) angular velocity were to vary,
it would do so in like ratio to the velocity of the
transducer (6), for which reason the number of impulses

0040586

that is sent out by the generator (14) per unit of travel of the transducer itself remains constant. It is clear that the type of trajectory and movement accomplished by the transducer whilst scanning the refractometer's signal may be totally different from those described, as indeed those means for transmission of the motor's movement to the transducer may differ; this will mean, in effect, only a different processing of the signal proceeding from the meter in order to introduce the appropriate co-efficients of proportion between the signal provided by the selection meter and the signal sent to the reading instruments.

Likewise it will be apparent, that any combination of signal provided by the selection meter may be utilised: for example one may use the number of impulses in light as the signal, or the number of impulses in shade, or alternatively one may use the difference between the numbers, or their ratio, or yet the ratio between just one of the number of impulses and the total number of impulses produced during the transducer's complete cycle, etc..

Other modifications of a practical nature made to the invention herein described could include, for example, any alternative system for processing of the signal proceeding from the selection meter, without there being in any way a deviation from the framework
of protection afforded to the conceptual ideas
behind the invention as claimed below.

0040586

Claims

1) Device for reading the optical signal provided by a refractometer, of a type which operates upon a refractometer designed to provide an optical signal consisting of a beam of light whose cross-section presents a light zone (3a) and a shaded zone (4a) perfectly distinguishable and divided along a line of separation (5a), characterised by the fact that it comprises : a photo-electric transducer (6) placed in cyclical motion by motorised elements comprising an electric motor (12) along a fixed trajectory which intersects the said line of separation in whatever position this last happens to be located within the field of the said optical signal; an electrical impulse generator (14) designed to provide a constant number of impulses per revolution of the electric motor; an electrical-impulse selection meter (15) whose selective operation is commanded by the signal produced by the photo-electric transducer, designed to select and perform a separate count of the number of impulses sent out from the said generator when the said transducer is found to be in the light zone, and the impulses sent out from the said generator when the said transducer is found to be in the shaded zone;

means for processing the signal supplied by the said impulse selection meter.

2) Device according to the preceding claim characterised by the fact that the said photo-electric transducer constitutes the sliding extremity of a crank mechanism (8) whose crank (8b) is placed in rotation by an electric motor, via a reduction gear (10), the said transducer sliding along a rectilinear guide (7) disposed perpendicularly to the said line of separation and running between two diametrically opposed points of a right-angled cross-section of the beam of light which constitutes the said optical signal.

0040586

-1/1-

**Fig.1**

**Fig.2**

**Fig.3**

European Patent Office

**EUROPEAN SEARCH REPORT**

| Category | Citation of document with indication, where appropriate, of relevant passages | Relevant to claim |
|---|---|---|
| | US - A - 3 672 777 (H. LLOP et al.)<br>* claim 1; fig. 2 *<br>-- | 1,2 |
| P | DD - A - 146 354 (W. HEINRICH et al.)<br>* claim 1 *<br>-- | 1 |
| A | DE - A - 2 404 586 (STE D'OPTIQUE, PRE-<br>CISION, ELECTRONIQUE ET MECANIQUE)<br>-- | |
| A | DE - A - 1 698 241 (F. MERKEL)<br>---- | |

**CLASSIFICATION OF THE APPLICATION (Int. Cl.³)**

G 01 N 21/41

**TECHNICAL FIELDS SEARCHED (Int. Cl.³)**

G 01 N 21/41

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 20-08-1981 | SCHWARTZ |

EPO Form 1503.1 06.78